# EUROPEAN PATENT APPLICATION

(11) **EP 4 807 485 A1**
(43) Date of publication of application: **16.09.2026**
(21) Application number: 25275013.8
(22) Date of filing: 12.03.2025
(51) Int. Cl.: G05D 1/698, H04W 4/00

(54) **UNCREWED VEHICLES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Arrangements are described for obtaining, at a first uncrewed vehicle, local RF data transmitted by one or more RF emitters; receiving, at the first uncrewed vehicle, remote data from each of one or more neighbouring uncrewed vehicles, wherein the first uncrewed vehicle and the one or more neighbouring uncrewed vehicles form at least a part of a plurality of uncrewed vehicles organised as a graph of nodes and edges; generating aggregated RF data for the first uncrewed vehicle based on the local RF data and the remote data in accordance with a message aggregation scheme; processing the aggregated RF data at the first uncrewed vehicle using an RF emitter profiling model in order to distinguish between different RF emitters; taking one or more decisions based, at least in part, on the processed aggregated RF data; and communicating between the first uncrewed vehicle and at least one other uncrewed vehicle of the plurality.

## Description

### FIELD

The present invention relates to uncrewed vehicles (such as uncrewed aerial vehicles, uncrewed ground vehicles, uncrewed underwater vehicles etc.), to the control of uncrewed vehicles, to communications within systems including uncrewed vehicles, and to systems and methods incorporating uncrewed vehicles.

### BACKGROUND

A plurality of uncrewed vehicles may be deployed as part of a group, for example for surveillance and signal intelligence. In some circumstances, it can be difficult or otherwise undesirable to control the group remotely; accordingly, it may be advantageous to enable individual uncrewed vehicles within the group to be controlled autonomously.

### SUMMARY

According to a first aspect, there is provided a method comprising: obtaining, at a first uncrewed vehicle, local radio frequency, RF, data, wherein said RF data is transmitted by one or more RF emitters (e.g. by receiving in-phase and quadrature data from the RF emitter); receiving, at the first uncrewed vehicle, remote data from each of one or more neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes, wherein the remote data includes remote RF data; generating aggregated RF data for the first uncrewed vehicle based on the local RF data and the remote data in accordance with a message aggregation scheme; processing the aggregated RF data at the first uncrewed vehicle using an RF emitter profiling model in order to distinguish between different RF emitters; taking one or more decisions based, at least in part, on the processed aggregated RF data; and communicating between the first uncrewed vehicle and at least one other uncrewed vehicle of the plurality. Each uncrewed vehicle may be an uncrewed aerial vehicle, an uncrewed ground vehicle, an uncrewed underwater vehicle or some similar device.

Some example embodiments further comprise grouping, based on the aggregated RF data (e.g. including RF profiling using a machine learnt model), RF signals into one or more groups, wherein the RF signals within each group are deemed to originate from the same RF emitter.

The said communicating may include sharing data relating to an environment of the first uncrewed vehicle, including some or all of said processed RF data. Alternatively, or in addition, the said communicating may include providing positioning information of the nodes of the system, including the position of the first uncrewed vehicle within the graph of nodes.

The method may further comprise a means for determining position or distance information for one or more of said RF emitters; and providing said position or distance information for said RF emitter to one or more other nodes of the system.

The said one or more decisions may comprise changes to one or more of: a location of the first uncrewed vehicle within the graph of nodes; a speed of movement of the first uncrewed vehicle; and a direction of movement of the first uncrewed vehicle. Alternatively, or in addition, said one or more decisions may include controlling a position of the first uncrewed vehicle to seek to optimise signal quality relating to an individual RF emitter of the one or more RF emitters. Alternatively, or in addition, said one or more decisions may include controlling a position of the first uncrewed vehicle to seek to optimise signal quality relating to a plurality of RF emitters of the one or more RF emitters.

In some example embodiments processing the aggregated RF data comprises generating an RF fingerprint for respective emitter(s). The said RF fingerprint may, for example, be generated based on features extracted by said **RF** emitter profiling model. The method may further comprise identifying one or more of said emitter(s) using said **RF** emitter profiling model.

The remote data received at the first uncrewed vehicle may comprise data relating to the uncrewed vehicles of the plurality, including the first uncrewed vehicle.

Some example embodiments further comprise adding a further uncrewed vehicle to the plurality, wherein said further uncrewed vehicle forms a new node having edges that represent communication links between the new node and existing nodes of the graph. Alternatively, or in addition, some example embodiments further comprise removing an uncrewed vehicle from the plurality in response to determining that the respective uncrewed vehicle no longer forms a part of the nodes of said graph.

The method may comprise receiving an algorithm (e.g. a machine learning model) for taking said decisions. The method may further comprise a training algorithm for obtaining a policy for taking said decisions.

The method may further comprise receiving an algorithm (e.g. a machine learning model) for implementing said message aggregation scheme. The method may further comprise training the algorithm for obtaining a policy for taking the said decisions and implementing said message aggregation scheme.

According to a second aspect, there is provided a method comprising: organising a plurality of uncrewed vehicles as a graph of nodes and edges, wherein each uncrewed vehicle of the plurality forms one of the said nodes and said edges represent communication links between said nodes, wherein each of the plurality of uncrewed vehicles has a position within the graph of nodes; obtaining local radio frequency, RF, data, at one or more of said plurality of uncrewed vehicles (e.g. by receiving in-phase and quadrature data from the RF emitter), wherein said RF data is transmitted by one or more RF emitters; locally generating aggregated RF data at each uncrewed vehicle, in accordance with a message aggregation scheme, based on the local RF data obtained at the respective uncrewed vehicle and, if available, remote RF data received from one or more neighbouring nodes; communicating information between nodes for use as said remote RF data; processing the aggregated RF data at one or more of said nodes using an RF emitter profiling model (e.g. by generating an RF fingerprint for the respective RF emitter(s)) in order to distinguish between different RF emitters; and taking one or more decisions at one or more of said nodes based, at least in part, on the processed aggregated sensor data generated at the respective node.

Some example embodiments further comprise grouping, based on the aggregated RF data, RF signals into one or more groups, wherein the RF signals within each group are deemed to originate from the same RF emitter.

The said communicating may include sharing data relating to an environment of the first uncrewed vehicle, including some or all of said processed RF data. Alternatively, or in addition, the said communicating may include providing positioning information of the nodes of the system, including the position of the first uncrewed vehicle and RF signal quality at this vehicle within the graph of nodes.

The said one or more decisions may comprise changes to one or more of: a location of the first uncrewed vehicle within the graph of nodes; a speed of movement of the first uncrewed vehicle; and a direction of movement of the first uncrewed vehicle. Alternatively, or in addition, said one or more decisions may include controlling a position of the first uncrewed vehicle to seek to optimise signal quality relating to an individual RF emitter of the one or more RF emitters. Alternatively, or in addition, said one or more decisions may include controlling a position of the first uncrewed vehicle to seek to optimise signal quality relating to a plurality of RF emitters of the one or more RF emitters.

The method may comprise receiving an algorithm (e.g. a machine learning model) for taking said decisions. The method may further comprise a learning algorithm for obtaining a policy capable of making said decisions.

The method may further comprise receiving an algorithm (e.g. a machine learning model) for implementing said message aggregation scheme. The method may further comprise training the algorithm for implementing said message aggregation scheme.

According to a third aspect, there is provided a first uncrewed vehicle comprising: an RF module for obtaining local radio frequency, RF, data, wherein said RF data is transmitted by one or more RF emitters; a communication module for receiving remote data from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes, wherein the remote data includes remote RF data; a control module for aggregated RF data for the first uncrewed vehicle based on the local RF data and the remote data in accordance with a message aggregation scheme; an RF emitter profiling model for processing the aggregated RF data at the first uncrewed vehicle using an RF emitter profiling model in order to distinguish between different RF emitters; a processor for taking one or more decisions based, at least in part, on the processed aggregated RF data. Each uncrewed vehicle may be an uncrewed aerial vehicle, an uncrewed ground vehicle, an uncrewed underwater vehicle or some similar device.

The first uncrewed vehicle may be configured to group, based on the aggregated RF data, RF signals into one or more groups, wherein the RF signals within each group are deemed to originate from the same RF emitter.

The said communicating may include sharing data relating to an environment of the first uncrewed vehicle, including some or all of said processed RF data. Alternatively, or in addition, the said communicating may include providing positioning information of the nodes of the system, including the position of the first uncrewed vehicle within the graph of nodes.

The first uncrewed vehicle may be configured to: determine position or distance information for one or more of said RF emitters; and provide said position or distance information for said RF emitter to one or more other nodes of the system.

The said one or more decisions may comprise changes to one or more of: a location of the first uncrewed vehicle within the graph of nodes; a speed of movement of the first uncrewed vehicle; and a direction of movement of the first uncrewed vehicle. Alternatively, or in addition, said one or more decisions may include controlling a position of the first uncrewed vehicle to seek to optimise RF signal quality relating to an individual RF emitter of the one or more RF emitters. Alternatively, or in addition, said one or more decisions may include controlling a position of the first uncrewed vehicle to seek to optimise RF signal quality relating to a plurality of RF emitters of the one or more RF emitters.

In some example embodiments processing the aggregated RF data comprises generating an RF fingerprint for respective emitter(s). The said RF fingerprint may, for example, be generated based on features extracted by said RF emitter profiling model. This fingerprint, which can be automatically extracted by a machine learning algorithm such as deep neural networks, can originate from intrinsic hardware imperfections in the emitter processing chain and hardware reflected in the transmission as described below. The method may further comprise identifying one or more of said emitter(s) using said RF emitter profiling model.

The remote data received at the first uncrewed vehicle may comprise data relating to the uncrewed vehicles of the plurality, including the first uncrewed vehicle.

Some example embodiments further comprise adding a further uncrewed vehicle to the plurality, wherein said further uncrewed vehicle forms a new node having edges that represent communication links between the new node and existing nodes of the graph. Alternatively, or in addition, some example embodiments further comprise removing an uncrewed vehicle from the plurality in response to determining that the respective uncrewed vehicle no longer forms a part of the nodes of said graph.

According to a fourth aspect, there is provided a system comprising a plurality of uncrewed vehicles organised as a graph of nodes and edges, wherein each uncrewed vehicle of the plurality forms one of the said nodes and said edges represent communication links between said nodes, wherein each of the plurality of uncrewed vehicles has a position within the graph of nodes. Some or all of the plurality of uncrewed vehicles may be as defined above with reference to the third aspect.

According to a fifth aspect, there is provided computer-readable instructions which, when executed by a computing apparatus, cause the computing apparatus to perform (at least) any method as described herein (including the methods of the first and second aspects described above).

According to a sixth aspect, there is provided a computer-readable medium (such as a non-transitory computer-readable medium) comprising program instructions stored thereon for performing (at least) any method as described herein (including the methods of the first and second aspects described above).

According to a seventh, there is provided an apparatus comprising: at least one processor; and at least one memory including computer program code which, when executed by the at least one processor, causes the apparatus to perform (at least) any method as described herein (including the methods of the first and second aspects described above).

### BRIEF DESCRIPTION OF THE FIGURES

Embodiments of the invention will now be described by way of example only with reference to the figures, in which:
Figure 1 is a block diagram of a system in accordance with an example embodiment;
Figure 2 is a flow chart showing an example operation of the circuit of Figure 1;
Figure 3 is a block diagram of a system in accordance with an example embodiment;
Figure 4 is a flow chart showing an operation of the circuit of Figure 3 in accordance with an example embodiment;
Figure 5 is a block diagram of a system in accordance with an example embodiment;
Figure 6 shows an example RF transmitter circuit;
Figures 7 to 9 are block diagrams of systems in accordance with example embodiments;
Figure 10 is a plot showing data generated in accordance with an example embodiment;
Figures 11 to 14 are block diagrams of systems in accordance with example embodiments;
Figure 15 is a flow chart showing functionality in accordance with an example embodiment;
Figure 16 is a message flow sequence in accordance with an example embodiment;
Figure 17 is a flow chart in accordance with an example embodiment;
Figure 18 is a block diagram of a system model in accordance with an example embodiment;
Figure 19 shows a neural network used in some example embodiments;
Figures 20 to 23 are flow charts in accordance with example embodiments; and
Figure 24 shows a system that can be used in implementations of example embodiments described herein.

### DETAILED DESCRIPTION

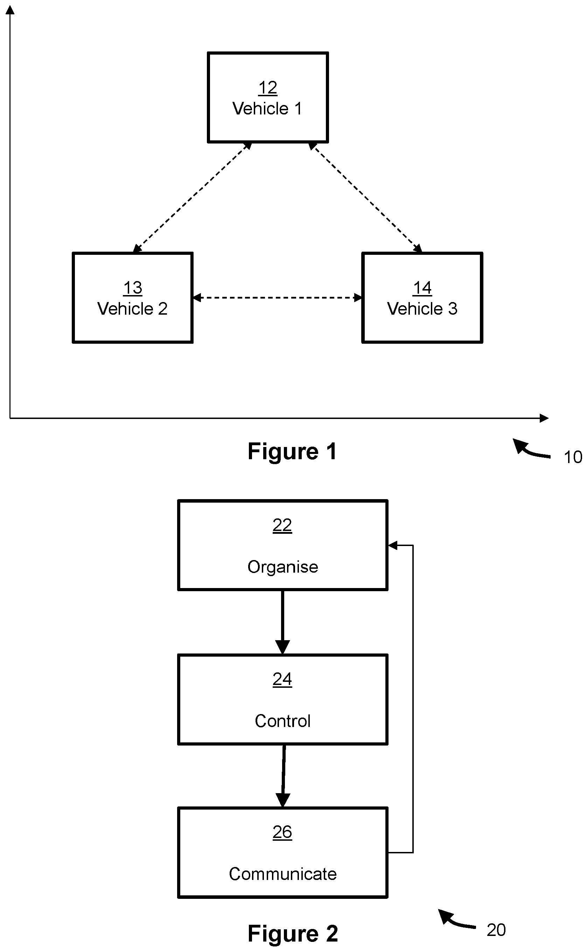

Figure 1 is a block diagram of a system, indicated generally by the reference numeral 10, in accordance with an example embodiment. The system 10 comprises a first uncrewed vehicle 12, a second uncrewed vehicle 13 and a third uncrewed vehicle 14. The uncrewed vehicles may, for example, be uncrewed aerial vehicles (UAVs), uncrewed ground vehicles (UGV), uncrewed underwater vehicles (UUV) or similar vehicles (or a combination of different types of such vehicles). Each uncrewed vehicle is in two-way communication with the other uncrewed vehicles of the plurality. The various uncrewed vehicles are sometimes referenced herein by the acronym UXV.

The uncrewed vehicles 12 to 14 are organised as a graph of nodes and edges (and may be referred to collectively as a "swarm" of uncrewed vehicles), wherein each uncrewed vehicle forms one of the said nodes and the edges represent communication links between the nodes. Each uncrewed vehicle has a position within the graph of nodes. By way of example, the uncrewed vehicles are shown plotted on a graph having an x-axis and a y-axis.

As discussed in detail below, some or all of the uncrewed vehicles have a control module (for controlling the functionality of the vehicle, such as moving the vehicle) and a communication module for forming communication links with other uncrewed vehicles. The communication module may, for example, provide positioning information of the nodes of the system that the first uncrewed vehicle forms a part. Note that whilst each node shown in the system 10 has a communication link with all other nodes, this is not essential to all example embodiments. Moreover, some nodes may be able to communicate with at least some other nodes indirectly using multi-hop communications, as discussed further below.

Figure 2 is a flow chart, indicated generally by the reference numeral 20, chart showing an example operation of the circuit of Figure 1. The flow chart 20 may, for example, be implemented at each of the vehicles 12, 13 and 14 described above.

The flow chart 20 starts at step 22, where the respective vehicle organises its position within the group of vehicles. At step 24, each vehicle controls itself within the group; for example, one or more vehicles of the plurality may take some action, as discussed in detail below. At step 26, each vehicle communicates with other vehicles in the group, for example by providing data such as the current position of the vehicle, vehicle status, vehicle mode and/or raw or processed information from one or more on-board sensors, such as information relating to characteristics of the physical and/or electromagnetic environment that the respective vehicle is operating in. The communications may also include data from previous time-step(s) that are being forward in the current time-step as part of multi-hop communications. The flow chart 20 then returns to step 22; thus, the positioning of vehicles within the swarm may be repeatedly adjusted, for example based (at least in part) on the position of other vehicles of the plurality.

Thus, the system 10 can operate in a self-organising manner, without the need for a central controller. This has a number of potential advantages. First, the system 10 is not vulnerable to failure of a central control module. Similarly, the individual vehicles of the plurality can operate even if communication links with some or all of the other vehicles is lost. Moreover, the system 10 is flexible and/or scalable; for example, vehicles can be added or removed from the group without needing a central controller to reconfigure the system.

It should be noted that although three vehicles are shown in the system 10, any number of vehicles could be provided. It should be noted that in some circumstances (particularly if a large number of vehicles are provided), it may not be possible for each vehicle to communicate with all other vehicles of the group. In that case, de-centralised organisation of the type described above can be implemented by enabling vehicles to exchange information with other vehicles using multi-hop communication (e.g. the first vehicle 12 may communicate with a new vehicle (not shown) via the second vehicle 13 or via the third vehicle 14).

The flow chart 20 enables the uncrewed vehicles of the system 10 (and similar systems) to communicate with neighbouring uncrewed vehicles of a swarm to transfer messages about the swarm, including under denied degraded intermittent or limited (DDIL) communication constraints in congested and/or contested electromagnetic environments. For example, if a direct link between second and third vehicles 13 and 14 fails (or does not exist), information can be shared between those vehicles by sending information via the first vehicle 12. This is sometimes referred to as either multi-hop communication of beyond line-of-sight (BLOS) communication.

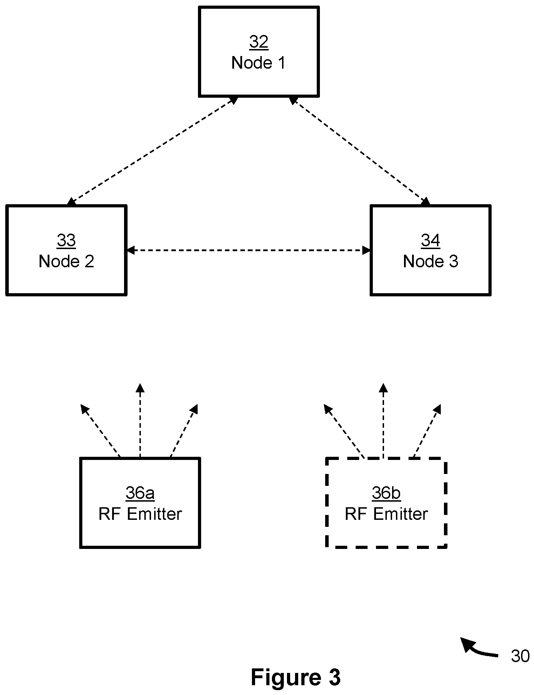

Figure 3 is a block diagram of a system, indicated generally by the reference numeral 30, in accordance with an example embodiment. The system 30 comprises a first node 32, a second node 33 and a third node 34. Those nodes may be the first vehicle 12, the second vehicle 14 and the third vehicle 16 respectively of the system 10 described above (or some similar uncrewed vehicles, UXVs). The system 30 also includes an RF emitter 36. The RF emitter may, for example, be a device such as a radio, a radar device, a transponder, a jamming device or the like. As shown in Figure 3, the RF emitter 36 moves from a first position 36a to a second position 36b.

RF signals emitted by the RF emitter 36 are detected at some or all of the nodes 32 to 34. Information regarding the detected RF signals can be shared between the nodes (i.e. via the communication links between nodes); thus, for example, a node that does not have a direct communication link with the RF emitter can still obtain information regarding the detected RF signals. By way of example, the nodes may determine the distance between the RF emitter and the respective node. By sharing that distance information between nodes, geolocation can be carried out in order to determine the position of the RF emitter 36 within the system 30. Moreover, the motion of each vehicle may be such that the accuracy of the obtained geolocation is improved by overcoming factors that can degrade performance, such as multipath and interference effects (including intentional interference, such as jamming), RF signal attenuation and occlusion effects. In this case, multiple vehicles can each act as receivers within a wider array of such receivers that can geolocate the RF emitter.

Thus, the system 30 provides a communication framework for RF emitter detection. The swarm of uncrewed vehicles can communicate with neighbouring vehicles in the swarm to transfer messages about the swarm, including the presence, position or other status of the RF emitter 36.

As discussed above, individual links between uncrewed vehicles may be unreliable (e.g. the connections may be intermittent), but some communications can generally be expected to take place, even if intermittent and/or of low quality. In-fact, expected unreliability, e.g. in the form of DDIL communication, can be part of a training phase for the swarm; example training arrangements are discussed in detail below.

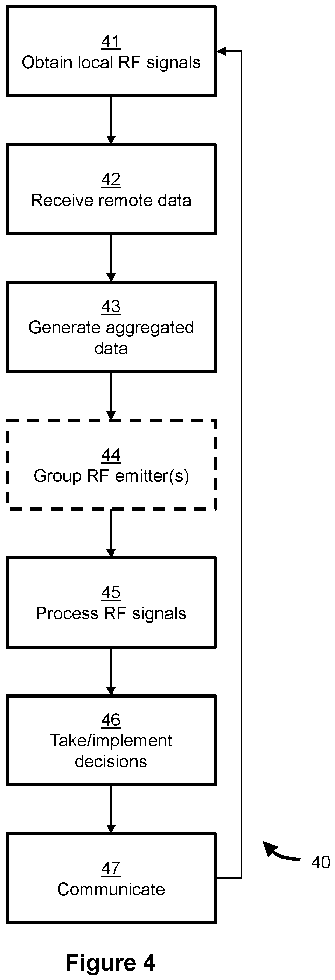

Figure 4 is a flow chart, indicated generally by the reference numeral 40, showing an operation of the circuit of Figure 3 in accordance with an example embodiment. The flow chart 40 may be implemented at each of multiple nodes of the system 30 (or some similar system); for example, the flow chart 40, or at least some aspects of the flow chart 40, may be implemented at all nodes of the system 30.

The flow chart 40 starts at step 41, where the relevant node(s) (e.g. each of one or more of the nodes 31 to 33, described above) obtain local radio frequency, RF, data transmitted by one or more RF emitters. In the context of the system 30, the respective nodes receive RF data from the RF emitter 36.

Further examples of local data that might be obtained in step 41 include:
- a current position of one or more uncrewed vehicles (e.g. other uncrewed vehicles of a swarm);
- movement data for one or more uncrewed vehicles, such as speed, velocity, bearing, or any other spatial-temporal characteristic;
- a monotonically decaying value representing a last sighting of a particular RF emitter (e.g. the RF emitter 36);
- a direction from a particular uncrewed vehicle to the last sighting of one or more RF emitters; and
- a node degree indicating a number of neighbouring uncrewed vehicles in communication with a particular uncrewed vehicle.

In step 42, remote data is received from one or more other nodes of the swarm. As discussed above, the node 32 to 34 form at least part of a plurality of nodes (e.g. uncrewed vehicles) organised as a graph of nodes and edges, wherein each node of the plurality forms one of the said nodes and said edges represent communication links between said nodes. The remote data may be received from one or more nodes in direct contact with the first node and/or from one or more nodes not in direct contact with the first node via multi-hop communication.

The remote data received from a particular other node in step 42 may include one or more of:
- Radio frequency, **RF,** data transmitted by one or more **RF** emitters as detected the respective node/uncrewed vehicle;
- Sensor data obtained by one or more sensors of the respective node/uncrewed vehicle;
- Sensor data obtained at the respective node/uncrewed vehicle that has been processed in some way (e.g. to reduce data exchange requirements);
- Aggregated data originating from multiple nodes/uncrewed vehicles (e.g. aggregated sensor data, aggregated processed sensor data or aggregated RF data); and
- RF fingerprinting pertaining to one or more of the detected RF emitters by the uncrewed vehicle.

At step 43, aggregated RF data is generated for the first node/uncrewed vehicle based, for example, on the local observation data (obtained in step 41) and the remote data (received in step 42). The aggregation may be performed in accordance with a message aggregation scheme. As discussed elsewhere herein, an algorithm (e.g. a trained machine-learning algorithm) may be provided to the respective node/uncrewed vehicles for performing the aggregation in step 43.

Generating the aggregated data in step 43 may include one or more of: determining a maximum and/or a minimum of a plurality of datapoints; generating an average of a plurality of datapoints; and generating a weighted average of a plurality of datapoints. Other data aggregation arrangements will be readily apparent to the skilled person.

It should be noted that both the local observations of step 41 and the remote data of step 42 may include data relating to one or more RF emitters (such as the RF emitter 36). Similarly, the aggregated sensor data may include information based on said data relating to said one or more RF emitters.

If multiple RF emitters are providing RF signals that are detected at the respective node, the RF emitters may be grouped into one or more groups or clusters, at step 44, based on the processed RF data. The groupings may be such that the RF signals within each group are deemed to originate from the same RF emitter (e.g. based on RF fingerprinting, as discussed below). This step may be omitted (for example, in the system 30, there is only one known RF emitter so that the step 44 may be unnecessary).

The RF signals are processed at step 45. The RF signals may be processed based on the aggregated RF data generated in step 43. By way of example, the respective node(s) may process received RF signals using an RF emitter profiling model (e.g. a trained RF emitter profiling model) in order to distinguish between different RF emitters. As discussed in detail below, one or more of the steps 43, 44 and 45 may be implemented using machine-learning models. As noted above, the motion of each node/vehicle may be such that the accuracy of the RF emitter profiling, grouping and recognition may be improved by overcoming factors that degrade performance for such tasks, such as multipath and interference effects (including intentional interference, such as jamming), RF signal attention and occlusion effects.

By way of example, the processing in step 45 may include processing obtained RF data to generate an RF fingerprint for respective emitters (such as the RF emitter 36). The RF fingerprint may be generated based on features extracted by an RF emitter profiling model. Further details regarding possible models are provided below.

For example, signals caused by hardware imperfections or other differences between devices can enable otherwise similar RF emitters to be distinguished; indeed, apparently identical RF emitters can be distinguished in this way. Such differences can collectively form a radio frequency fingerprint (RFF) that a receiver can be programmed to identify (or at least distinguish). Note that such differences are generally hard to spoof and hard to conceal.

At step 46, one or more decisions are taken (and may be implemented) at the relevant node (e.g. the relevant uncrewed vehicle of a plurality) based, at least in part, on the processed RF data; for example, the node may be controlled in accordance with an algorithm. As discussed above, a plurality of uncrewed vehicles may be organised as a graph of nodes and edges, wherein each uncrewed vehicle forms one of the said nodes and said edges represent communication links between said nodes. An uncrewed vehicle being controlled in step 46 may have a position within the graph of nodes and the step 46 may comprise controlling that position, for example to seek to maximise performance of a pursued task (such as RF emitter(s) geolocation, profiling, identification etc.). The step 46 is therefore an example implementation of the step 24 (and possibly also the step 22) of the flow chart 20.

At least some of the uncrewed vehicles of a swarm may have independent decision-making capability (thereby enabling distributed decision-making). For example, the swarm can be trained to detect, identify and track RF emitters (such as the RF emitter 36) using a machine learning approach that combines multi-agent deep reinforcement learning, MADRL (such as Multi Agent Proximal Policy Optimisation, MAPPO) and Graph Machine Learning, GML (e.g. graph neural network, GNN). This enables GML-based communication (between nodes) and MADRL based actuation (at different nodes/uncrewed vehicles), for example uncrewed vehicle motion in a particular pattern. The MADRL component may consider both local observations (from local sensors - see step 41) and aggregated messages obtained via GML approaches (from other nodes of the graph - see step 42). As discussed in detail below, RF emitters may be detected (and possibly identified) using machine learning models (e.g. deep neural networks). Thus, ML based emitter profiling (e.g. using DNNs) may be provided in combination with MADRL and GML based swarm control.

Decision-making can take place at uncrewed vehicles even if communications with some (or all) other nodes is not possible. The distributed nature of aggregation of messages means that messages will tend to get through so that good (and consistent) decisions can be reached at different nodes.

In some example embodiments all nodes (e.g. all uncrewed vehicles of the system 30) have decision-making capabilities, but this is not essential to all example embodiments. For example, some uncrewed vehicles may be provided primarily for obtaining data.

At step 47, the respective node (at which the flow chart 40 is implemented) communicates with at least one other node. This communication is typically between relatively local (e.g. neighbouring) nodes (assuming sufficient signal quality). Note that in some configurations, communication may not be possible with a particular node, even though it nearby, for example if there is a physical blockage or some other factor that would lead to low signal quality (such as multi-path, occlusion or interference).

The step 47 may include sharing data relating to the environment (e.g. the physical and/or electromagnetic environment) of the first uncrewed vehicle (including some or all of said sensed or collected RF data) and/or sharing salient information about local processing performed at the relevant node and is an example implementation of the step 26 of the flow chart 20. The information communicated in step 47 may be the remote data received at another node in another instance of the step 42.

By way of example, a first node implementing the step 47 may communicate positioning information of the first node and other nodes within a graph of nodes to other nodes.

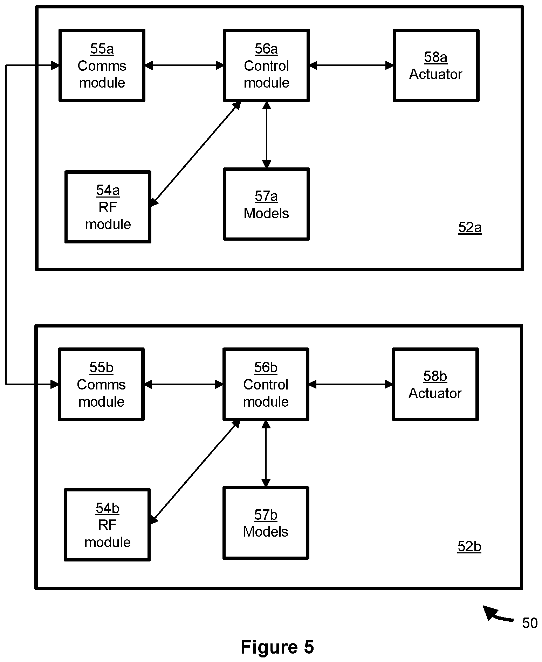

Figure 5 is a block diagram of a system 50 in accordance with an example embodiment. The system 50 comprises a first uncrewed vehicle 52a and a second uncrewed vehicle 52b. The uncrewed vehicles 52a and 52b may, for example, be two of the uncrewed vehicles of the system 30 described above. Each of the uncrewed vehicles 52a and 52b may be able to implement the flow chart 40 described above.

The first uncrewed vehicle 52a comprises an RF module 54a, a communication module 55a, a control module 56a, one or more models 57a, and an actuator 58a. Similarly, the second uncrewed vehicle 52b comprises an RF module 54b, a communication module 55b, a control module 56b, one or more models 57b, and an actuator 58b. The actuators 58a, 58b may, for example, include a motor that can be used to change one or more of a position, an orientation or a speed of a vehicle, or a control mode that can change a mode of the RF receiver on the vehicle.

The RF modules 54a, 54b obtain (e.g. receive) radio frequency, RF, data transmitted by an RF emitter (such as the RF emitter 36 described above).

The communication modules 55a, 55b can be used for communication with other nodes or vehicles of a plurality (e.g. between the first and second uncrewed vehicle 52a, 52b). Thus, the communication modules 55a, 55b may communicate with communication modules of other uncrewed vehicles similar to the first and second uncrewed vehicles shown in order to implement steps 42 and 47 of the flow chart 40. Thus, the communication modules 55a, 55b may be used to receive remote data (e.g. remote RF emitter data) from each of one or neighbouring uncrewed vehicles and to provide information (such as aggregated RF emitter information) to neighbouring uncrewed vehicles.

The communication modules 55a and 55b are connected via communication links. The communication links are typically local, short-range communication link. The communication links may be intermittent and/or unreliable and may change over time (e.g. as the respective uncrewed vehicles move) such as in DDIL communication environments.

The control modules 56a, 56b are used to process the obtained RF data using a trained RF emitter profiling model in order to distinguish between (and possibly identify) different RF emitters (e.g. using a feature extraction method) and to control a node/uncrewed vehicle in accordance with an algorithm based, at least in part, on the processed RF data. The model(s) 57a, 57b may, for example, be (or include) an RF emitter profiling model comprising a plurality of neural network or deep learning models (e.g. convolutional neural networks (CNN) layers or some other neural network or deep learning architecture, such as a deep neural network, DNN).

By way of example, the control modules 56a, 56b may control the respective node of a system by controlling the position of that node (e.g. an uncrewed vehicle) to seek to optimise signal quality relating to an individual RF emitter or to seek to optimise signal quality relating to a plurality of RF emitters. A change in position and/or orientation as defined by the control module 56a, 56b may be implemented by the respective actuator 58a, 58b (e.g. in an example implementation of the step 46 of the flow chart 40).

The control modules 56a, 56b may be used to generate aggregated sensor data for the respective uncrewed vehicle based, at least in part, on the local observation data (obtained by the respective sensors - see step 41) and the remote data (obtained by the respective communication module - see step 42). As discussed elsewhere, the aggregated sensor data may be generated (by the respective control module) in accordance with a message aggregation scheme. The message aggregation scheme may comprise a model (e.g. an ML model) that may be one of the models 57a, 57b.

Thus, as outlined above, the control modules 56a, 56b may use machine learning models (e.g. deep neural networks) for emitter profiling and may also implement graph-machine learning based swarm control.

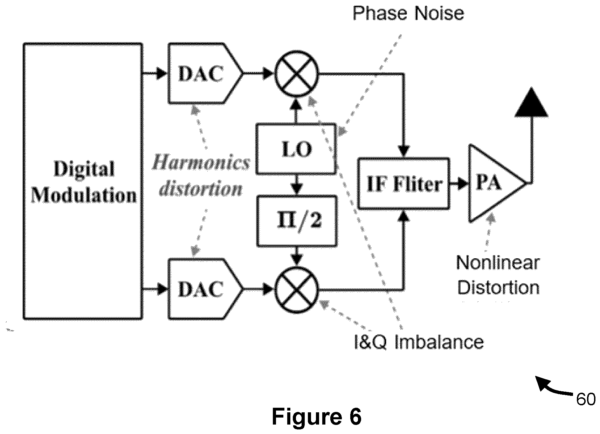

Figure 6 shows an example RF transmitter circuit, indicated generally by the reference numeral 60. The RF transmitter may be the RF emitter 36 described above. Note that the RF transmitter circuit shown in an example communication device circuit; those for radars or jammers could be quite different, although the principles described herein may generally be the same.

The RF transmitter circuit 60 includes many imperfections and many sources of noise. By way of example, the RF transmitter circuit 60 includes digital-to-analog converters (DACs) that may introduce harmonic distortion, a pair of mixers that may suffer from an I/Q imbalance, a local oscillator that may introduce phase noise and a power amplifier that may introduce non-linear distortion. If such imperfections are unique to individual instances of the RF transmitter circuit 60, then those characteristics can potentially be used to distinguish a transmitter from other similar transmitters. The distinguishable features (which collectively form the emitter's radio frequency fingerprint, RFF) can be learnt and extracted by the deployed profiling model (e.g. based on convolutional neural networks (CNNs), as discussed further herein).

It should be noted that the sources of imperfections and noise described above with reference to Figure 6 are provided by way of example only. Other sources of imperfections and noise may exist in addition to, or instead of, one or more of the sources described above (particularly if the structure of the RF emitter is different).

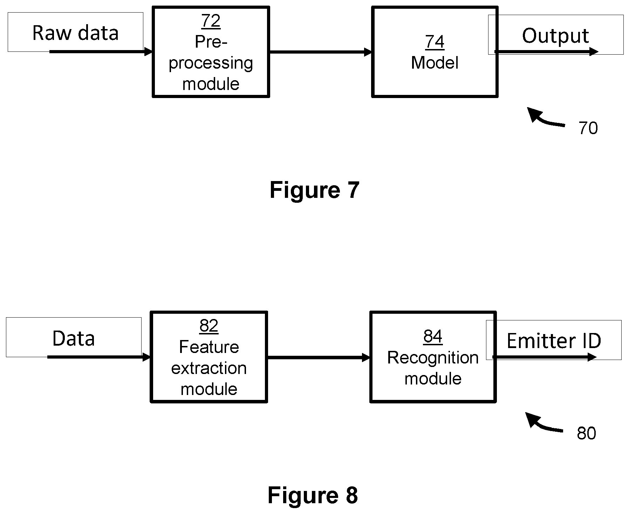

Figure 7 is a block diagram of a system, indicated generally by the reference numeral 70, in accordance with an example embodiment. The system 70 comprises a pre-processing module 72 and a model 74. The pre-processor module may form part of the control modules 56a, 56b and the model may be (or may form part of) the models 57a, 57b described above.

The pre-processing module 72 receives raw data relating to an RF emitter (such as the RF emitter 36 described above). The raw data may, for example, comprise in-phase and quadrature data relating to the RF emitter and/or some other raw, received RF emissions and may be received by the RF module 51 described above. Examples of raw data that might be provided are described above with reference to Figure 6.

The model 74 is used to convert the pre-processed raw data into an output. The model 74 may implement a specific emitter identification (SEI) module (which incorporates the aforementioned RF emitter profiling module). The model 74 may be developed, at least in part, using machine learning (ML) principles (e.g. using a deep neural network) in which RFF for SEI are learned from real signals. This enables multi-purpose SEIs to be generated.

The model 74 may, for example, be a foundation model (or some similar model) that is trained for the robust extraction of RF fingerprints from received RF data including from unknown and/or previously unseen RF emitters. The model 74 can thereby generalise well to new (i.e. previously unseen) RF emitters.

Figure 8 is a block diagram of a system, indicated generally by the reference numeral 80, in accordance with an example embodiment. The system 80 is an example implementation of the model 74 described above. The system 80 comprises a feature extraction module 82 for learning/extracting emitter RF fingerprints and a recognition module 84.

The feature extraction module 82 receives data, which may be the data output by the pre-processor module 72 described above. The feature extraction module 82 may be trained to identify characteristics of RF signals transmitted by example RF emitters and may provide an RF fingerprint to the recognition module 84.

The recognition module 84 may match the output of the feature extraction module 82 to an emitter identifier (Emitter ID) of a particular RF emitter.

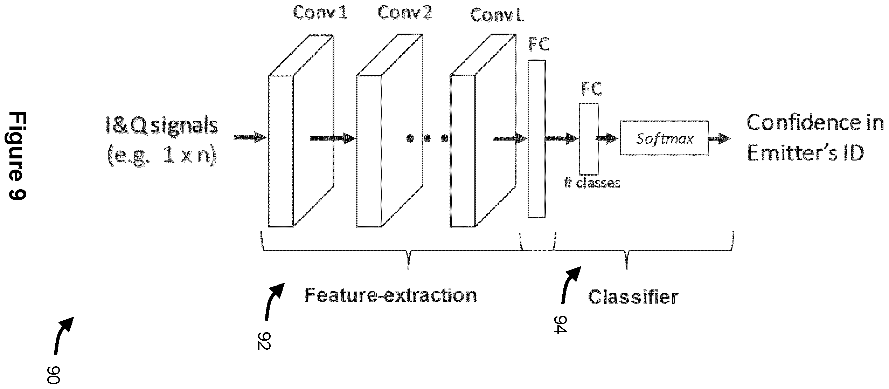

Figure 9 is a block diagram of a system, indicated generally by the reference numeral 90, in accordance with an example embodiment. The system 90 includes a feature extraction section 92 (that may be used to implement the feature extraction module 82 described above) and a classifier 94 (that may be used to implement the recognition module 84 described above).

The feature extraction module 92 includes a number of layers in the form of a deep learning model, such as a convolution neural network (CNN) (L layers - Conv1, Conv2... ConvL - are shown in FIG. 9 by way of example). The CNN layers may, for example, be used to extract features from transmitted RF signals. The layers of the feature extraction module 92 are trainable using machine learning principles. Other network architectures, such as Transformer, recurrent neural network (RNN), multilayer perceptron (MLP), hierarchical approaches comprising multiple such models etc. could be used instead of the aforementioned CNN.

The classifier 94 takes the output of the feature extraction module 92 (e.g. a radio frequency fingerprint) and generates an indication of the most likely identifier of the respective RF transmitter. Note that the provision of the classifier 94 is not an essential feature of all example embodiments. For example, a system may be provided that can distinguish individual emitters, without actually identifying those emitters.

When updating the system 90 (for example to identify a new RF emitter), the feature extraction module typically does not need to be updated; it is often sufficient to simply update the classifier 94, thereby reducing the amount of training and the quantity of neural network parameters that need to be updated.

It should be noted that the system 90 is provided by way of example only. Many other machine learning/deep learning models and neural network architectures may be used.

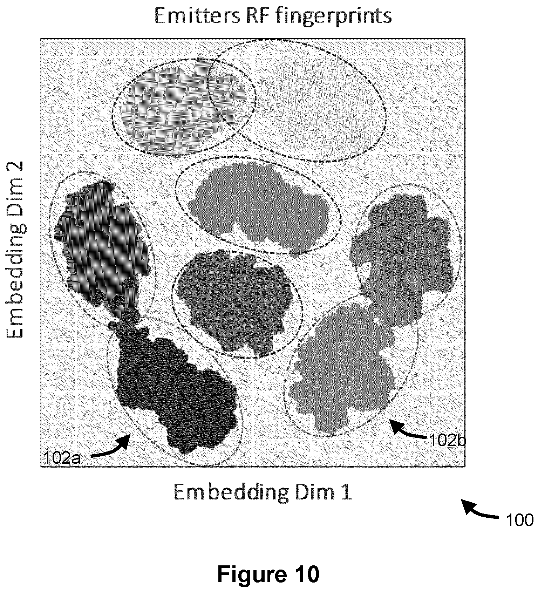

Figure 10 is a plot, indicated generally by the reference numeral 100, showing data generated in accordance with an example embodiment. The plot 100 shows example outputs of the automatic feature extraction module 92 expressed as a two-dimensional plot. The plots show multiple signals from particular RF emitters grouped using dotted lines. For example, signals 102a are from one RF emitter and signals 102b are from a second RF emitter.

The plot 100 shows the results of t-distributed stochastic neighbor embedding (t-SNE) applied to the learnt higher dimensional embeddings (e.g. of dimensions exceeding 100) from the processed RF signal (i.e. capturing the emitter's RF fingerprint). However, this is purely for reducing the dimensionality of the RFF and visualising it in 2D and is provided by way of example only.

The plot 100 demonstrates that, in principle, the model used to generate the plot can be used to recognise individual RF emitters from received RF signals.

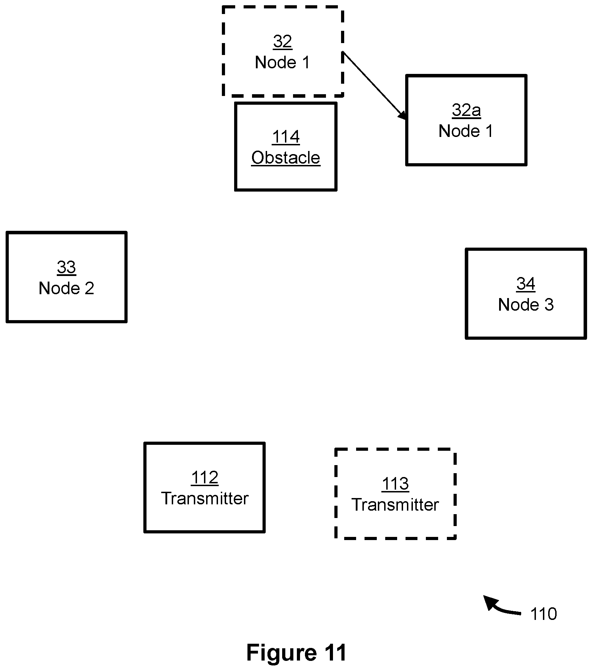

Figure 11 is a block diagram of system, indicated generally by the reference numeral 110, in accordance with an example embodiment. The system 110 includes the first node 32, second node 33 and third node 34 of the system 30 described above. As discussed above, those nodes may be vehicles, such as uncrewed vehicles.

The system 110 further comprises a transmitter 112 that is an example of the RF emitter 36 of the system 30. An obstacle 114 is shown in Figure 11 that prevents the first node 32 from receiving signals from the transmitter 112.

The first node 32 may include a control module 56a, 56b (or a similar controller) that can be used to control the position of the first node to seek to optimise signal quality relating to an individual RF emitter of the one or more RF emitters. In the context of the system 110, the first node 32 may be controlled to optimise the signal quality from the transmitter 112 by moving the first node to the position 32a shown in Figure 11. Signal quality may be dependent, for example, on factors such as signal strength and levels of signal interference.

The system 110 may further comprise a second transmitter 113 and the position of the first node (and other nodes) may be controlled to seek to optimise signal quality relating to a plurality of RF emitters (such as the transmitters 112 and 113).

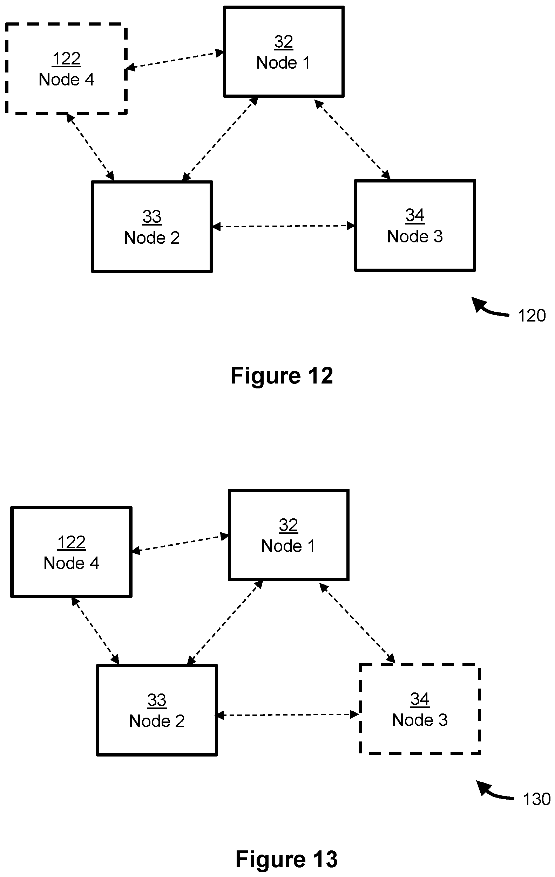

Figure 12 is a block diagram of a system, indicated generally by the reference numeral 120, in accordance with an example embodiment. The system 120 includes the first node 32, second node 33 and third node 34 of the system 30 described above. As discussed above, those nodes may be vehicles, such as uncrewed vehicles.

The system 120 may be controlled by adding a fourth node 122 to the system. The fourth node may be a further uncrewed vehicle and may form a new node having edges that represent communication links between the new node and existing nodes of a graph. In the example shown in Figure 12, the fourth node 122 has communication links with the first node 32 and the second node 33, but not with the third node 34. Communications can, however, occur between the third and fourth nodes via either the first node 32 or the second node 33 (or both).

Figure 13 is a block diagram of a system, indicated generally by the reference numeral 130, in accordance with an example embodiment. The system 130 includes the first node 32, second node 33, third node 34 and fourth node 122 of the system 120 described above. As discussed above, those nodes may be vehicles, such as uncrewed vehicles.

The system 130 may be controlled by removing one of the nodes from the system (the third node 34 in the example shown) in response to determining that the respective uncrewed vehicle no longer forms a part of the nodes of said graph.

By way of example, the first, second and third nodes 32 to 34 may form part of a swarm of nodes. The fourth node 122 may be launched and added to the swarm (as shown in Figure 12). Subsequently, the third node 34 may be damaged, destroyed, or otherwise removed from the swarm (as shown in Figure 13). Thus, the nodes that form part of the swarm can change over time, providing a flexible, configurable swarm of nodes.

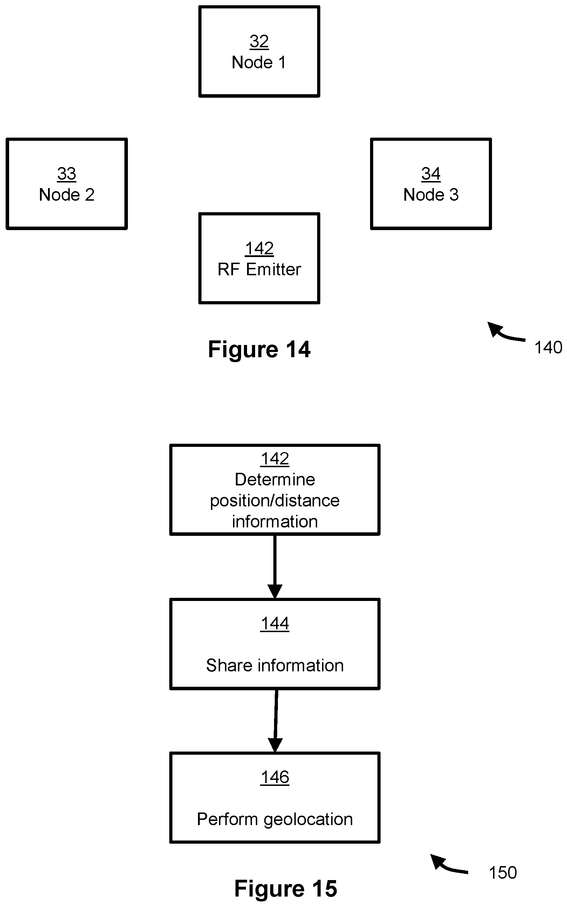

Figure 14 is a block diagram of a system, indicated generally by the reference numeral 140, in accordance with an example embodiment. The system 130 includes the first node 32, the second node 33 and the third node 34 of the system 30 described above and further comprises an RF emitter 142.

Figure 15 is a flow chart, indicated generally by the reference numeral 150, showing functionality in accordance with an example embodiment. The flow chart 150 may be implemented at one or more of the nodes or uncrewed vehicles of the system 140.

At step 142 one or more (e.g. all) of the nodes 32 to 34 determine position or distance information relating to the **RF** emitter 142. For example, grouping discussed above may be used to identify signals received from the **RF** emitter 142 and those signals used to determine the **RF** emitter location or distance relative to the respective node.

At step 144, the position or distance information is shared between the first to third nodes.

At step 146, any node with sufficient position or distance information (and hence sufficiently high quality data) can determine the position of the RF emitter 142 using geolocation.

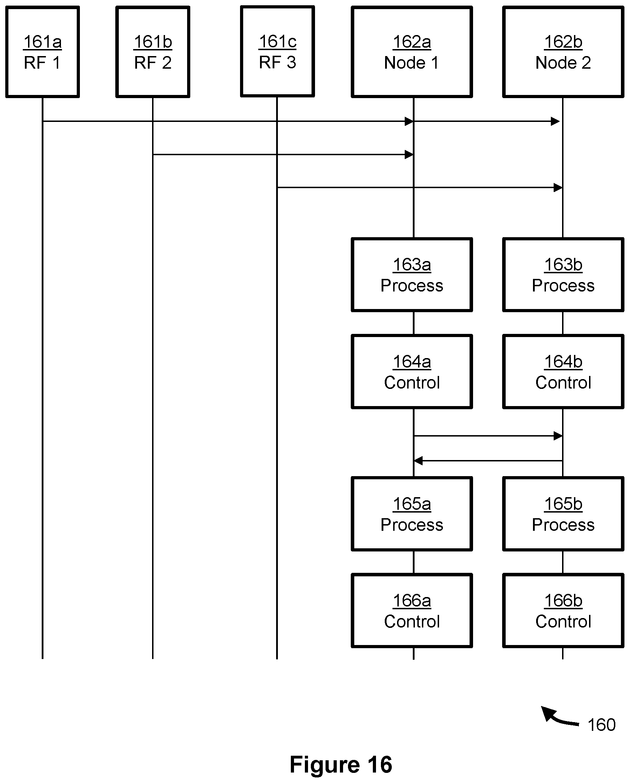

Figure 16 is a message flow sequence, indicated generally by the reference numeral 160, in accordance with an example embodiment. The message flow sequence 160 shows signals transmitted by a first RF emitter 161a, a second RF emitter 161b and a third RF emitter 161c and also shows communications between, and actions taken at, a first node 162a and a second node 162b. The nodes may, for example, be uncrewed vehicles as discussed in detail above.

The first node 162a receives RF signals from the first RF emitter 161a and the second RF emitter 161b (but not from the third RF emitter 161c). Similarly, the second node 162b receives RF signals from the first RF emitter 161a and the third RF emitter 161c (but not from the second RF emitter 161b).

The first node 162a processes the received RF signals (see step 163a) and controls the first node accordingly (see step 164a). The second node 162b processes the received RF signals (see step 163b) and controls the second node accordingly (see step 164b).

The first and second nodes then share information regarding the RF emitter signals they have received. This provides additional RF information that may be useful in controlling the respective nodes. Accordingly, the further RF signals are processed (in step 165a at the first node and step 165b at the second) and used to control the first node (in step 166a) and the second node 176b).

Of course, the message flow sequence 160 is highly schematic. For example, the processing of RF signals and the controlling of the respective node are likely to be ongoing functions, rather than explicit steps as suggested in Figure 16.

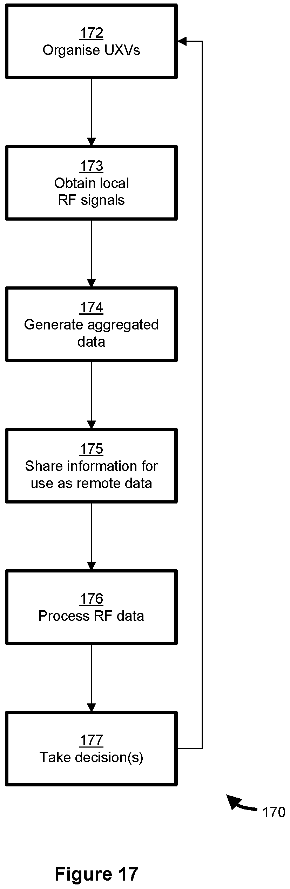

Figure 17 is a flow chart, indicated generally by the reference numeral 170, in accordance with an example embodiment.

The flow chart 170 starts at step 172, where a plurality of uncrewed vehicles are organised as a graph of nodes and edges. As discussed in detail above, each uncrewed vehicle of the plurality forms one of the said nodes and said edges represent communication links between said nodes, wherein each of the plurality of uncrewed vehicles has a position within the graph of nodes. By way of example, the step 172 may organise the uncrewed vehicles 32 to 34 of the system 30 described above.

At step 173, local RF signals are obtained at one or more (e.g. all) of the plurality of uncrewed vehicles, e.g. from one or more RF modules (such as the RF modules 54a, 54b) of the respective uncrewed vehicles. Note that some uncrewed vehicles of the plurality may not obtain local observation data (e.g. if said uncrewed vehicles do not have the appropriate RF modules).

At step 174, aggregated data is generated locally at one or more of the uncrewed vehicles (in accordance with a message aggregation scheme), based on the local observation data obtained at the respective uncrewed vehicle and, if available, remote data (e.g. aggregated data) received from one or more neighbouring nodes. The message aggregation may be performed in accordance with a received model (e.g. as a model generated as a result of training, such as MADRL training, as discussed herein). Instances of the step 174 may, for example, be implemented by the control modules 56a, 56b described above.

The local observation data and the remote data may include data relating to one or more RF emitters, as discussed above. Similarly, said aggregated sensor data may include information based on said data relating to said one or more RF emitters. Alternatively, or in addition, the aggregated data generated in step 174 may comprise data relating to the uncrewed vehicles of the plurality.

At step 176, RF data (e.g. the RF data obtained in the step 173 and/or the aggregated data generated in the step 174) is processed at each of one or more of said nodes (e.g. in an implementation of the step 43 described above)

At step 177, one or more decisions are taken at one or more of said nodes based, at least in part, on the aggregated sensor data generated at the respective node. As discussed above, an algorithm (e.g. a ML algorithm) may be provided to one or more of said uncrewed vehicles for taking said decisions. The step 177 may be implemented, for example, by the control modules 56a, 56b and/or the models 57a, 57b (and may be executed by the actuators 58a, 58b). As noted above, some uncrewed vehicles of the plurality may omit step 177.

The data relating to one or more of said one or more first RF emitters may comprise one or more of: an indication of whether presence of a respective RF emitter is detected by the respective uncrewed vehicle; a decaying value (e.g. exponentially decay value) representing a last sighting of one of said RF emitter by the respective uncrewed vehicle; and a direction or location of one of said RF emitter(s) detected by the first uncrewed vehicle.

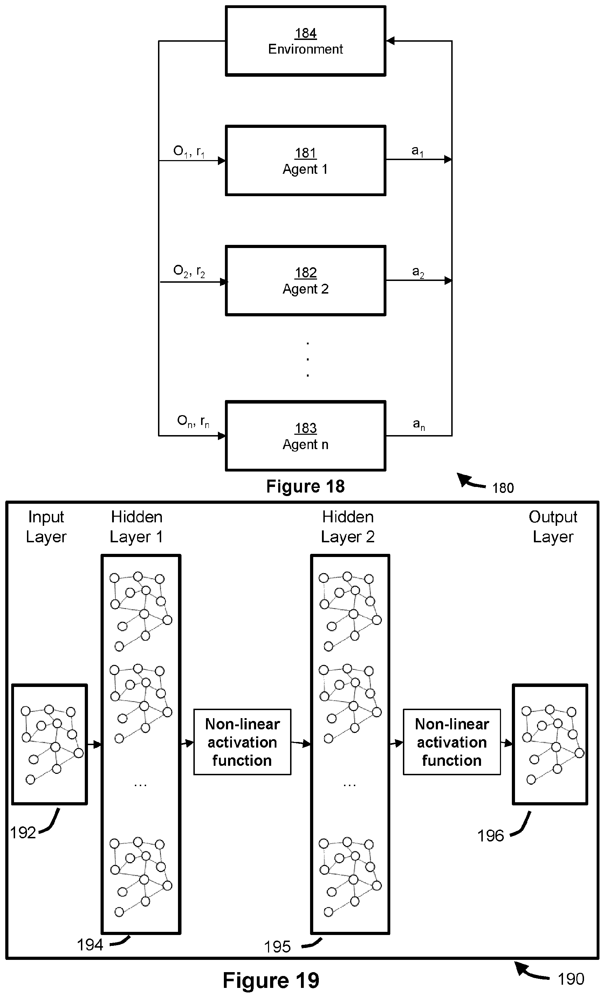

Figure 18 is a block diagram of a system model, indicated generally by the reference numeral 180, in accordance with an example embodiment. The system model 180 may be used to model systems such as the systems 10 and 30 described above.

The system model 180 comprises a plurality of agents, including a first agent 181, a second agent 182 and an nth agent 183, and also includes an environment 184. Each agent represents one of the uncrewed vehicles of the systems described herein and the environment 184 represents the environment (including the electromagnetic environment) in which the uncrewed vehicles operate.

Each agent receives an input from the environment 184 and provides an output to the environment. Within the diagram *oᵢ* represents the local observation for each agent i. Upon receiving an observation each agent i takes an action *aᵢ*. During training rewards *rᵢ* can be used to train AI agents using incentive-based learning approaches, e.g., reinforcement learning or genetic algorithms, as discussed further below.

Using the environment, the agents are trained in accordance with machine learning principles to modify the functionality of the system that the system model 180 is modelling. For example, the agents can be trained to maximise rewards when defining what the agents do within the environment 184, including how the agents react to RF emitters. For example, positive rewards can be returned by the training environment for agents identifying an RF emitter.

The models describing the agents 181 to 183 can be provided to respective uncrewed vehicles and may be stored as the models 57a, 57b described above.

By way of example, the agents 181 to 183 may describe trainable message aggregation schemes that can be used to generate the aggregated data in step 45 of the algorithm 40. Alternatively, or in addition, the agents 181 to 183 may describe decision-making algorithms used in step 46 of the algorithm 40.

Figure 19 shows a neural network, indicated generally by the reference numeral 190, used in some example embodiments. For example, the neural network 190 may be used to describe the agents 181 to 183 described above and may be the models 57a, 57b of the uncrewed vehicles 52a, 52b described above.

The neural network 190 comprises a first layer 192, one or more hidden layers 194, 195, and an output layer 196. Input data (such as RF emitter data and/or remote data and/or RF profiles/groupings) may be provided to the first layer 192. Processed data, such as aggregated RF emitter data, may be output by the output layer 196.

Parameters of the neural network 190 can be updated in accordance with machine-learning principles to modify the performance of the model (and thereby to modify the performance of the respective agent). For example, as discussed above, the agents can be trained to maximise rewards when defining what the agents do within the environment 184, including how the agents react to RF emitters.

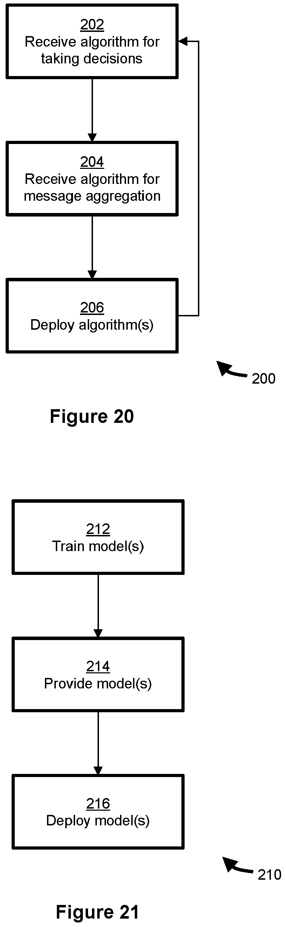

Figure 20 is a flow chart, indicated generally by the reference numeral 200, in accordance with an example embodiment. The flow chart 200 may be implemented at one or more of the uncrewed vehicles described herein.

The flow chart 200 starts at step 202, where the uncrewed vehicle receives an algorithm (e.g. a machine-learning algorithm) for taking decisions. The algorithm may be a MADRL algorithm trained in accordance with the principles outlined above, a hard-coded algorithm or a combination thereof.

At step 204, the uncrewed vehicles receive an algorithm (e.g. a machine-learning algorithm) for implementing a message aggregation scheme. Such a message aggregation scheme may be used to generated aggregated data (e.g. aggregated sensor data) as discussed in detail above. The algorithm could be machine-learning based (e.g. where each "hop" described above is a GNN layer, with learnt parameters), rules-based (e.g. using hand-coded algorithms), or a hybrid approach could be used (e.g. here a hop could be either rules-based or machine-learning).

At step 206, the algorithms received in steps 202 and 204 are deployed at the respective uncrewed vehicle.

Figure 21 is a flow chart, indicated generally by the reference numeral 210, in accordance with example embodiments. The flow chart 210 may be used to generate one or more of the algorithms referred to in the flow chart 200.

The flow chart 210 starts at step 212, where an algorithm (e.g. a machine-learning algorithm) for taking decisions at one or more uncrewed vehicles and/or an algorithm (e.g. a machine-learning algorithm) for implementing a message aggregation scheme at one or more uncrewed vehicles are trained. The algorithms may be MADRL algorithms trained in accordance with the principles outlined above, a hard-coded algorithm or a combination thereof. The algorithms generated in the step 212 may be modification of pre-existing algorithms or may be generated from scratch.

At step 214, the algorithms generated at step 212 are provided to the respective nodes/uncrewed vehicles of a plurality.

At step 216, the algorithms provided in step 214 are deployed at one or more uncrewed vehicles (e.g. in accordance with the flow chart 200 described above).

Of course, flow charts 200 and 210 are schematic and may be implemented in other ways. For example, the steps 202 and 204 of the flow chart 200 could be implemented in a different order or at the same time, or one of the steps 202 and 204 may be omitted.

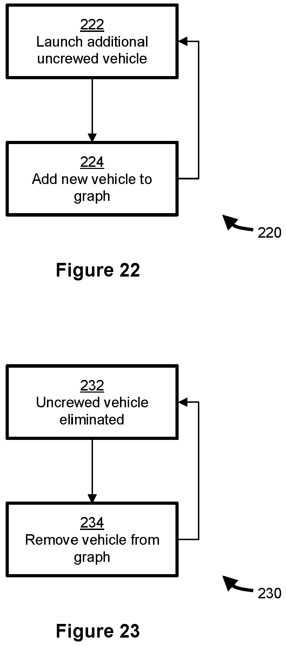

Figure 22 is a flow chart, indicated generally by the reference numeral 220, in accordance with example embodiments. The flow chart 220 starts at step 222 where an additional uncrewed vehicle is launched. At step 224, the additional uncrewed vehicle is added to a graph of nodes and edges of an existing plurality of uncrewed vehicles. In this way, one or more additional uncrewed vehicles can be added to an existing swarm of uncrewed vehicles. This may add existing functionality to an existing swarm.

Figure 23 is a flow chart, indicated generally by the reference numeral 230, in accordance with example embodiments. The flow chart 230 starts at step 232 where an uncrewed vehicle is eliminated. At step 24, the eliminated uncrewed vehicle is removed from a graph of nodes and edges of an existing plurality of uncrewed vehicles. By way of example, an existing uncrewed vehicle of a swarm may be lost due to damage or destroyed by enemy action or in some other way.

The flow charts 220 and 230 demonstrate the ad-hoc nature of groups/swarms of uncrewed vehicles in some example embodiments.

Advantages of at least some of the embodiments described herein include the provision of:
- Adaptable swarms of uncrewed vehicles that can respond to changes in a scene and to changes in an electromagnetic environment.
- Scalable and modular systems in which the size of a swarm can be changed.
- Low cost solutions by providing relatively low-cost uncrewed vehicles.
- Resilient systems that can adapt to the loss of one or more uncrewed devices and/or to the loss of one or more communication links.
- Versatile solutions that can, for example, transition between different terrains by deploying suitable uncrewed vehicle types (e.g. uncrewed aerial vehicles, uncrewed ground vehicles, uncrewed underwater vehicles etc.).
- Autonomous device allowing on-edge implementation (i.e. at individual uncrewed vehicles).
- Locally deployed algorithms that seek to provide high performance, even in congested and contested operational theatres.
- Reduced risk of revealing location of operators or control sensors due to the distributed communications and control.

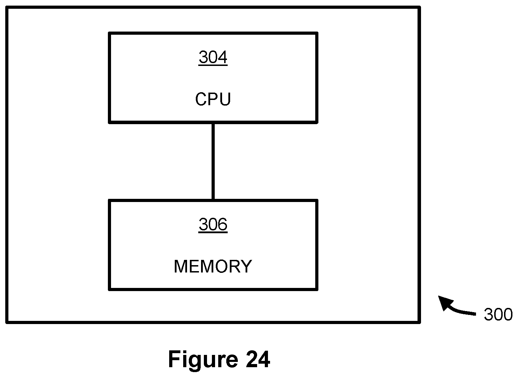

Figure 24 shows a system 300 (comprising a memory 306 and processor 304) that can be used in implementations of example embodiments described herein. The memory 306 may store a computer program for implementing aspects of one or more of the algorithms described herein (such as the flow charts and message sequences 20, 40, 150, 160, 170, 200, 210, 220 or 230 described above). In practice, the processor 304 is likely to be a digital signal processor (DSP) including processing blocks such as multipliers, adder/subtractors, and storage registers. The processing may be performed in parallel using pipelines and local registers to enable a high processing rate and data throughput.

Embodiments of the components described herein can be implemented using any suitable software, hardware or firmware applications, programming language, data editors, etc., and may be represented/stored/processed using any suitable data structures, and so on.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method comprising:
obtaining, at a first uncrewed vehicle, local radio frequency, RF, data, wherein said RF data is transmitted by one or more RF emitters;
receiving, at the first uncrewed vehicle, remote data from each of one or more neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes, wherein the remote data includes remote RF data;
generating aggregated RF data for the first uncrewed vehicle based on the local RF data and the remote data in accordance with a message aggregation scheme;
processing the aggregated RF data at the first uncrewed vehicle using an RF emitter profiling model in order to distinguish between different RF emitters;
taking one or more decisions based, at least in part, on the processed aggregated RF data; and
communicating between the first uncrewed vehicle and at least one other uncrewed vehicle of the plurality.

2. The method of claim 1, further comprising grouping, based on the aggregated RF data, RF signals into one or more groups, wherein the RF signals within each group are deemed to originate from the same RF emitter.

3. The method of claim 1 or claim 2, wherein:
said communicating includes sharing data relating to an environment of the first uncrewed vehicle, including some or all of said processed RF data; and/or
said communicating includes providing positioning information of the nodes of the system, including the position of the first uncrewed vehicle within the graph of nodes.

4. The method of any one of the preceding claims, further comprising:
determining position or distance information for one or more of said RF emitters; and
providing said position or distance information for said RF emitter to one or more other nodes of the system.

5. The method of any one of the preceding claims, wherein said one or more decisions comprises changes to one or more of:
a location of the first uncrewed vehicle within the graph of nodes;
a speed of movement of the first uncrewed vehicle; and
a direction of movement of the first uncrewed vehicle.

6. The method of any one of the preceding claims, wherein said one or more decisions include:
controlling a position of the first uncrewed vehicle to seek to optimise signal quality relating to an individual RF emitter of the one or more RF emitters; and/or
controlling a position of the first uncrewed vehicle to seek to optimise signal quality relating to a plurality of RF emitters of the one or more RF emitters.

7. The method of any one of the preceding claims, wherein processing the aggregated RF data comprises generating an RF fingerprint for respective emitter(s), wherein said RF fingerprint is optionally generated based on features extracted by said RF emitter profiling model.

8. The method of claim 7, further comprising identifying one or more of said emitter(s) using said RF emitter profiling model.

9. The method of any one of the preceding claims, wherein the remote data received at the first uncrewed vehicle comprises data relating to the uncrewed vehicles of the plurality, including the first uncrewed vehicle.

10. The method of any one of the preceding claims, further comprising:
adding a further uncrewed vehicle to the plurality, wherein said further uncrewed vehicle forms a new node having edges that represent communication links between the new node and existing nodes of the graph; and/or
removing an uncrewed vehicle from the plurality in response to determining that the respective uncrewed vehicle no longer forms a part of the nodes of said graph.

11. The method of any one of the preceding claims, further comprising:
receiving an algorithm for taking said decisions; and/or.
receiving an algorithm for implementing said message aggregation scheme.

12. The method of any one of the preceding claims, wherein each uncrewed vehicle is an uncrewed aerial vehicle, an uncrewed ground vehicle or an uncrewed underwater vehicle.

13. The method of any one of the preceding claims, wherein obtaining said RF data comprising receiving in-phase and quadrature data from the RF emitter.

14. A method comprising:
organising a plurality of uncrewed vehicles as a graph of nodes and edges, wherein each uncrewed vehicle of the plurality forms one of the said nodes and said edges represent communication links between said nodes, wherein each of the plurality of uncrewed vehicles has a position within the graph of nodes;
obtaining local radio frequency, RF, data, at one or more of said plurality of uncrewed vehicles, wherein said RF data is transmitted by one or more RF emitters;
locally generating aggregated RF data at each uncrewed vehicle, in accordance with a message aggregation scheme, based on the local RF data obtained at the respective uncrewed vehicle and, if available, remote RF data received from one or more neighbouring nodes;
communicating information between nodes for use as said remote RF data;
processing the aggregated RF data at one or more of said nodes using an RF emitter profiling model in order to distinguish between different RF emitters; and
taking one or more decisions at one or more of said nodes based, at least in part, on the processed aggregated sensor data generated at the respective node.

15. A first uncrewed vehicle comprising:
an RF module for obtaining local radio frequency, RF, data, wherein said RF data is transmitted by one or more RF emitters;
a communication module for receiving , remote data from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes, wherein the remote data includes remote RF data;
a control module for aggregated RF data for the first uncrewed vehicle based on the local RF data and the remote data in accordance with a message aggregation scheme;
an RF emitting profiling model for processing the aggregated RF data at the first uncrewed vehicle using an RF emitter profiling model in order to distinguish between different RF emitters;
a processor for taking one or more decisions based, at least in part, on the processed aggregated RF data.
